# EUROPEAN PATENT SPECIFICATION

(11) **EP 2 895 522 B1**
(45) Date of publication and mention of the grant of the patent: **11.11.2020**
(21) Application number: 13766889.3
(22) Date of filing: 03.09.2013
(51) Int. Cl.: C08G 18/66, C08G 18/08, C09D 175/04, C08G 18/42

(54) **AQUEOUS POLYURETHANE DISPERSION DERIVED FROM TERTIARY ALKYL GLYCIDYL ESTERS**
WÄSSRIGE POLYURETHANDISPERSION AUS TERTIÄREN ALKYLGLYCIDYLESTERN
DISPERSION AQUEUSE DE POLYURÉTHANE ISSUE D'ESTERS (ALKYL TERTIAIRE)GLYCIDYLIQUES

(30) Priority: 13.09.2012 EP 12075105; 06.02.2013 EP 13000586
(43) Date of publication of application: 22.07.2015
(73) Proprietor: Hexion Research Belgium SA, 1348 Ottignies-Louvain-la-Neuve (BE)
(72) Inventor: STEINBRECHER, Christophe, B-1348 Ottignies Louvain-la-Neuve (BE); HEYMANS, Denis, B-1348 Ottignies Louvain-la-Neuve (BE); ERDEM, Bedri, Stafford 77477 (US); O'SHAUGHNESSY, Mike, Stafford 77477 (US); BLAISDELL, Jeff (Habb Co), Stafford 77477 (US); MUELLER, Gerhard, 1348 Ottignies Louvain-La-Neuve (BE)
(86) International application number: PCT/EP2013/002648
(87) International publication number: WO 2014/040708

(56) References cited:
- EP-A1- 0 682 049
- WO-A1-00/56827
- WO-A1-98/12273

## Description

This invention relates to a Waterborne Polyurethane Dispersions (WPU) derived from the reaction products of tertiary alkyl glycidyl esters based hydroxyl terminal polyester polyols with polyisocyanates and chain extended with polyfunctional amines and water that have shown surprising characteristics for self-coalescence.

The shift from organic solvents to water for dispersing and applying resins in various systems solved many of the environmental and cost problems associated with the use of organic solvents. Water-borne systems, however, have resulted in other problems.

Polyurethane coatings are well known in the coatings market as high performance, protective coatings. These products are well established and known in the industry as highly versatile products that may be tailored for specific and diverse applications to deliver exceptional performance properties such as adhesion, abrasion resistance, mar / scuff resistance, resiliency, flexibility, hardness or softness, weather ability and substrate protection. Water based polyurethane products have made significant impact in the same diverse application areas primarily due to their ability to deliver the high performance characteristics associated with polyurethane polymers while reducing the total volatile organic compound emissions in application. The manufacture of such polyurethane polymers is well known in the art and generally involves the reaction of multifunctional isocyanate compounds with multifunctional hydroxyl compounds and multifunctional amine compounds. One limiting factor in universal acceptance of polyurethane products, and in particular water base polyurethane products, has been the relatively high cost associated with these polymers. A major factor in creating the relatively higher cost of polyurethane products is the high cost of the multifunctional polyisocyanate starting material necessary for the manufacture. Although water based polyurethane products yield a significant reduction in volatile organic emissions there is an on-going drive to further reduce volatile organic emissions beyond the levels achieved with standard water based polyurethane polymers currently available in the market but maintain the desired high performance characteristics. Co-solvent free and even VOC free polyurethane products are known and available in the market today in an attempt to meet this need but all are insufficient in one or more areas like room temperature film formation and hardness. Multi-component water base polyurethane products are available but are comprised of low molecular weight entities that require careful premixing prior to application, create short limitations in pot-life after mixing, and require in-situ reaction to gain sufficient molecular weight to achieve desired performance properties. Water base polyurethanes utilizing linear and branched polyester hydroxyl compounds are available but yield low film hardness and/or insufficient film formation at room temperature and generally yield less than desired abrasion resistance properties.

Water base polyurethane products utilizing linear, dihydroxy polyesters, polycaprolactones, polyethers and polycarbonates as the multifunctional hydroxyl component either yield low film hardness, or require high levels of co-solvent to effect film formation at room temperature. Water base polyurethanes utilizing the di-isocyanate (TMXDI) are available but either yield low film hardness and/or require high levels of post added co-solvent to effect film formation at room temperature and are cost prohibitive due to the high relative cost of the TMXDI polyisocyanate entity. Numerous water based systems exist utilizing water base polyurethane chemistry in conjunction with alternate polymer technology but these systems are not wholly water base polyurethane technology and in many cases tend to dilute the expected resulting water base polyurethane properties.

Aqueous polyurethane dispersions are used in a large variety of applications due to a well balanced performance profile such as good flexibility and durability, good resistance to abrasion, good chemical resistance as well as good adhesion to various substrates. They can be found in adhesives, paints and coatings such as those for kitchen cabinets, wood and vinyl flooring, plastics, leather coatings, glass fiber sizing, glass coatings, automotive / transportation coatings, textile coatings etc. The production process for WPU entails the incorporation of water soluble entities of either a nonionic, cationic or ionic nature. The most popular method for waterborne polyurethane manufacture, well established in the art, entails the incorporation of polar species like dimethylol propionic acid (DMPA) into the pre-polymer backbone to ensure subsequent water dispersibility and solubility via ion formation through neutralization of the acid with basic compounds like triethylamine. The incorporation of the solid DMPA entity generally results in significant increases in the pre-polymer viscosity and necessitates the addition of cosolvents to keep the viscosity at a level sufficient for processing at the required temperatures. The common cosolvent used for WPU manufacture is n-methyl pyrrolidone (NMP). The NMP serves multiple functions in the WPU process. First, the NMP acts as a diluent to help lower viscosity of the pre-polymer to manageable levels for processing. Second, the NMP assists to dissolve the solid DMPA entity thereby decreasing cycle times for pre-polymer processing. Third, and generally regarded as the critical determining factor in establishing required cosolvent levels, the residual NMP in the final fully reacted WPU system serves as a coalescent for the WPU film. Total levels of required cosolvents may vary greatly but are generally determined by the amounts necessary to allow fully coalesced final WPU films at room temperature. In general, this level is in excess of what is required for viscosity control process purposes. Once the pre-polymer is diluted with cosolvent to suitable processing viscosity levels and made suitably hydrophilic via the salt formation at the ionic groups attached the low molecular weight pre-polymer is than dispersed in water and chain extended to high molecular weight WPU chains via reaction with various multifunctional amines such as hydrazine.

Changes in legislation on the labeling of products containing N-methyl-pyrolidone (NMP;toxicity and reprotoxicity R phrases added) have resulted in increased efforts of the coating industry to replace NMP with alternative co-solvents or reduce or avoid the use of co-solvents altogether.

In the present invention it has been surprisingly found that hydroxyl terminal telechelic polyesters polyols derived from the reaction products of tertiary alkyl glycidyl esters based hydroxyl terminal polyester polyols with polyisocyanates, suitable hydrophilic entity, chain extended with polyfunctional amine and dispersed in water have shown surprising improved coalescence ability resulting in decreased co-solvent demand for room temperature coalescence.

WO 2006/002864 patent describes a polyurethane dispersion containing ≤ 5 wt-% NMP by weight of polyurethane and where the polyurethane is derived from either aliphatic or aromatic isocyanate and isocyanate-reactive polyol bearing ionic and/or potentially ionic water dispersing groups and non-ionic isocyanate-reactive polyols. The pre-polymerization is performed in the presence of reactive diluents such as vinyl monomers, e.g. methyl methacrylate, ethyl methacrylate and styrene and in consequence a hybrid polyurethane vinyl polymer is obtained which requires a reduced amount of NMP as co-solvent due to the diluting effect of the vinyl monomers during the pre-polymerization process. The reactive diluent is polymerized with suitable peroxide or persulfate catalysts after the polyurethane pre-polymer has been reacted with at least one active hydrogen chain-extending compound to form the PU polymer.

"Preparation and properties of waterborne polyurethanes with natural dimmer fatty acids based polyester polyol as soft segment" by Xin Liu et al. , published in Progress in Organic Coatings 72 (2011), 612 - 620 describes the advantages of the incorporation of dimer fatty acids based polyester polyols such as C36 dimer Priplast polyols from Croda. Improvements in surface hydrophobicity (increase in water contact angle > 90 degree), hydrolytic resistance, water resistance and thermal resistance are reported although physico-mechanical properties, notably elongation at break were reduced by introduction of dimer fatty acid polyesters.
It is concluded that the observed improvements are effected by the incorporation of long hydrophobic branched chains and the high degree of phase separation which the PU polymer exhibited.

US 6,482,474 by D. R. Fenn et al. describes the use of a hydroxyl functional polymer which is preferably derived from a polyfunctional carboxylic acid and a monoepoxide such as Cardura E10. To that purpose low molecular weight polyols (Mw 66 - 150) such as ethylene glycol, propylene glycol, trimethylol propane or neopentylglycol are reacted with dicarboxylic acid anhydrides such as maleic anhydride, succinic anhydride, phtalic anhydride and hexahydrophtalic anhydride. The resulting polyfunctional acid compound has substantially the same number of acid groups as the polyol had hydroxyl groups. The ensuing reaction of the polyfunctional acid compound with the monoepoxide yields a OH-functional polyester polyol which can be further reacted with additional moles of polyfunctional acid and monoepoxide. The final hydroxyl functional polyol is then reacted with the polyisocyanate mixture in the presence of an organic solvent. The coating is used as a chip resistant sandable primer in the spot repair of automotive paints producing high quality results.

An anonymous research disclosure No. 505 033 in May 2006 in Research Disclosure titled "Glycidyl ester based telechelic polyesters" describes the step growth polymerization of hydroxyl terminated telechelic polyesters from dicarboxylic acids, dicarboxylic acid anhydrides and glycidyl esters. 1 mole of diacid is first reacted with 2 moles of glycidyl ester until at least 85 mole% conversion is achieved. The resulting diol is then reacted sequentially with n times 2 moles of dicarboxylic anhydride and then 2 moles of glycidyl ester until the desired molecular weight is achieved (n can vary from 0 to 10). The resulting polyester polyols have been found suitable to make polyurethane dispersions.

US3,607,900 by Kazy Sekmakas describes water-dispersible polyurethane resins that are provided by reacting a resinous polyol with a stoichiometric deficiency of polyisocyanate to provide hydroxyl-functional polyurethane in which carboxyl functionality is generated with a portion of the carboxyl functionality being preferably consumed by reaction with monoepoxide to generate hydroxyl ester groups remote from the backbone of said polyurethane resin. The aqueous polyurethane resins are employed in electro coating processes in which a unidirectional electrical current is passed through the aqueous bath containing the dispersed resin to deposit at the anode of the system.

The US 6,087,444 by Shanti Swarup at al. is about aqueous dispersions of polyurethane/acrylic polymers can be made that provide water-based coating compositions with good humidity resistance as well as a combination of performance properties required for commercial coating uses, without requiring the use of costly special types of polyisocyanates The authors are not telling the reader on the way that it could be achieved a low viscosity composition and high hardness of the cured film. EP0682049 is about hydrophilic polyurethane-polyureas which are useful as dispersants for synthetic resins obtained by reacting: a polyisocyanate component comprising at least one organic polyisocyanate and at least one isocyanate reactive fatty acid derivative. These resins are specially designed for water base composition for air-drying coatings.

In WO2000/56827 an aqueous cross linkable coating composition comprising i) an autoxidisably cross linkable polymer containing unsaturated fatty acids residue, ii) a not autoxidisably cross linkable vinyl polymer bearing carbonyl groups and iii) carbonyl-reactive groups to crosslink the vinyl polymer. Document WO 98/12273 A1 (examples 1-3, 8, 10-12) discloses the synthesis of a hydroxyl terminated oligomer from Cardura E (glycidyl ester of neodecanoic acid) and a dicarboxylic acid (examples 1-3). Then a PUR-dispersion (examples 8, 10-12) is prepared from a polyisocyanate, the product of examples 1-3, DMPA, water, chain extender and (meth)acrylates monomers.

Waterborne polyurethane dispersions (WPU)of this invention, derived from the reaction products of tertiary alkyl glycidyl esters based hydroxyl terminal polyester polyols with aliphatic isocyanates and chain extended with hydrazine and dispersed in water have shown surprising inherent, characteristics for self-coalescence.

The observed phenomena resulted in a decreased demand for external co-solvent like n-methyl-pyrolidone (NMP) for room temperature film formation or allowed for the elimination of NMP altogether. The resulting polymer films have shown a higher degree of hardness compared to stoichiometrically equivalent industry benchmarks which would allow for a reduction of the necessary isocyanate content. Furthermore the cured films have shown improved hardness and abrasion resistance over these benchmarks.

The benefits of the invention are:
- Altered pre-polymer molecular architecture also allows for faster dissolution of DMPA such shortening process batch time (24 min versus 40 to 60 minutes).
- Resulting waterborne PU polymer dispersions with intrinsic characteristics for self-coalescence aiding film formation and reducing the demand for co-solvent like NMP or alternatively Proglyde DMM for room temperature film formation. NMP can be eliminated from the formulation altogether and is replaced by more benign alternative co-solvents such as proglyde DMM (dipropyleneglycoldimethylether) at lower amounts.
- Aqueous WPU dispersions having significantly reduced isocyanate content.
- Cured films exhibiting a higher degree of hardness compared to stoichiometrically comparable benchmarks based on standard polyester polyols (neopentylglycoladipate, hexanediol adipate, butanediol adipate, BDO initiated polycaprolactone, CHDM initiated polycarbonate polyols) thus allowing for a reduction in expensive isocyanates to obtain the same degree of hardness whilst maintaining physico-mechanical properties on a similar level with reduced co-solvent levels for coalesence.
- Cured films exhibiting a comparatively improved inherent abrasion resistance.

The polyurethane aqueous dispersion composition of the invention and comprising (i)a hydroxyl terminal oligomer derived from an alkyl glycidyl ester and carboxylic di-acids and anhydride, hemi-ester wherein the di-acids, the anhydride the or the hemi-ester are not derived from unsaturated fatty acids,(ii) a poly-isocyanate and (iii) suitable hydrophilic entity know in the art wherein the oligomer is characterized in that the molecular weight is between 600 and 5000, preferably between 800 and 3500, and most preferably between 1200 and 2800, lead to the above listed properties, and free of meth(acrylic) derivatives.

A embodiment of this invention is wherein the alkyl glycidyl ester is a linear or branched alkyl glycidyl ester with the alkyl group containing from 4 to 12 carbon atoms.

A preferred embodiment of this invention is wherein the branched alkyl chain is a tertiary alkyl chain with 4 to 12 carbon atoms, preferably from 8 to 10 carbon atoms and most preferably with 9 carbon atoms.

The above composition are formulated for use with the level of co-solvent being lower than 8.6 weight% on total composition and possibly the composition is free of N-methylpyrolidone. The compositions of this invention are formulated with a level of isocyanate between 7.5 and 17.5 weight% on total composition.

Another embodiment of this invention is that the hydroxyl terminal oligomer is a diol derived from an alkyl glycidyl ester and carboxylic di-acids and anhydride, hemi-ester and a poly-isocyanate, wherein the oligomer is characterized in that the molecular weight is between 600 and 5000, preferably between 800 and 3500, and most preferably between 1200 and 2800.

The alkyl glycidyl ester can be with a linear alkyl chain such as glycidyl esters of C-6 to C-20 fatty Acids. or with a branched alkyl chain such as glycidyl neodecanoate.

The most preferred glycidyl ester monomers are commercially available from Momentive Specialty Chemicals Inc. as Cardura 10, Cardura 9 and Cardura 5 (glycidyl pivalate).

Cardura polyols are prepared as taught in the anonymous research disclosure and Momentive Specialty Chemical brochure "Cardura E10P - Low Viscosity Diol and Triol Polyesters", 2006 Momentive Specialty Chemicals Inc.

Polyurethane dispersions were prepared as detailed in the next section. As industry benchmark Sancure 815 was chosen, this product currently has 8.5% NMP and while it does help in processing, it is also needed for film formation. These products utilize a hexane diol / neopentyl glycol / adipic acid diol. In addition to the diol, these products utilize Desmodur W (H12MDI) as the isocyanate, DMPA to introduce the acid functionality and are chain extended with hydrazine.

Wet dispersions and cured film of Cardura polyester based experimental PUDs and industry benchmark were subjected to below mentioned test regimen. The primary application purpose of experimental coatings was in clear wood coatings, but the invention also has uses in adhesives, paints and coatings such as those for kitchen cabinets, wood and vinyl flooring, plastics, leather coatings, glass fiber sizing, glass coatings, automotive / transportation coatings, textile coatings etc.
- Wet dispersion properties
   - Viscosity, solids content (Attempt equal 34% TSC to equate to SANCURE 815T), pH, appearance, heat age stability, freeze/thaw stability
- Dry film properties
   - Air dry 24 hours/oven dry 150°C/2 minutes
   - Record 100% modulus, ultimate tensile, ultimate elongation, softening point, film clarity
   - Abrasion resistance using ASTM D4060
- Air dry Koenig hardness development
   - #40 rod on glass air dried RT recorded over 10 day-period
- Hydrolysis resistance
   - Record differences in modulus, ultimate tensile, ultimate elongation after dry film exposure to ASTM D2247 "Standard practice for testing water resistance of coatings in 100% relative Humidity"

Manufacture of water base polyurethane utilizing Cardura polyol as the di-hydroxyl component in place of polyester polyols such as hexanediol adipate polyester polyols, butandiol adipate polyester polyols, hexane/neopentyl adipate polyester polyols or butanediol initiated polycaprolactone polyols and maintaining all other reactants at equivalent weight levels comparatively yields:
28 to 100% reduction in co-solvent demand required for film formation at room temperature
120 - 129% increase in surface hardness as measured by Koenig hardness
65 - 85% improvement in abrasion resistance

Manufacture of water base polyurethane utilizing Cardura polyol as the di-hydroxyl component in place of CHDM initiated polycarbonate polyol and maintaining all other reactants at equivalent weight levels comparatively yields:
47.9% reduction in co-solvent demand required for film formation at room temperature
2 - 3% increase in surface hardness as measured by Koenig hardness
0 - 46% improvement in abrasion resistance.

Use of Cardura polyols addresses the need for reduced co-solvent demand for room temperature film formation while supplying increased surface hardness at equal isocyanate content and/or decreased isocyanate demand for equal surface hardness resulting in reduced cost, and, maintaining equal or improved abrasion resistance properties.

The composition of the invention wherein the weight % level of cosolvent required for film formation at 25°C of the resulting polyurethane polymer is 35 to 60 % lower than stochiometrically equivalent polyurethane systems utilizing hexane-neopentyl adipate polyester or BDO initiated polycaprolactone or CHDM initiated polycarbonate as the polyol component.

The composition according to the invention and wherein the Koenig Hardness of the resulting polyurethane polymer is 83 to 124% higher than stochiometrically equivalent polyurethane systems utilizing hexane-neopentyl adipate polyester or BDO initiated polycaprolactone as the polyol component.

The composition according to the invention and wherein the Koenig Hardness of the resulting polyurethane polymer is 2 to 3% higher, and, the weight % level of cosolvent required for film formation at 25°C of the resulting polyurethane polymer is 55 to 60% lower than stochiometrically equivalent polyurethane systems utilizing CHDM initiated polycarbonate as the polyol component.

The composition according to the invention and wherein the Taber Abrasion resistance measured as mg loss/1000 cycles yields between 49 to 84% reduction in mg loss comparative to stochiometrically equivalent polyurethane systems utilizing hexane-neopentyl adipate polyester or BDO initiated polycaprolactone as the polyol component.

The composition according to the invention and wherein the Taber abrasion resistance measured as mg loss/1000 cycles yields between 10 to 15% reduction in mg loss comparative to stochiometrically equivalent polyurethane systems utilizing CHDM initiated polycarbonate as the polyol component.

The composition according to the invention and wherein the resulting polyurethane film may yield approximately equivalent Koenig Hardness and 40-46% reduction in cosolvent required for film formation at 25°C and 20-22% reduction in polyisocyanate required as compared to a system utilizing hexanediol-neopentyl glycol polyester polyol component.

### EXAMPLES

### Example 1

To a clean, dry reactor vessel add 138.51 grams of dicyclohexylmethane diisocyanate (H12MDI) and 199.29 grams of 1258 molecular weight hydroxyl terminal polyester diol derived from the reaction products of tertiary alkyl glycidyl esters. Start mixing and heat the mixture to 77°C (170°F). Start a nitrogen bleed into the head space of the reactor vessel. With heating on low charge 0.017 grams stannous octoate catalyst. Allow the reaction mixture to exotherm resulting in increased internal batch temperature to 110-121°C (230-250°F) with heating off. Allow reaction mixture to begin cooling while removing and testing an aliquot for complete reaction of the polyisocyanate with the polyester to yield a maximum amount of residual polyisocyanate content of 9.19%. Upon confirmation of completeness of reaction charge 48.00 grams of dipropylene glycol dimethyl ether cosolvent. Adjust the internal batch temperature to 93°C (200°F). Charge 14.17 grams of dimethylol propionic acid. Hold the internal batch temperature at 88-96°C (190-205°F). Approximately 20 minutes after charging the dimethylol propionic Acid test an aliquot of the reaction mixture for complete reaction of the residual polyisocyanate with the dimethylol propionic Acid to yield a maximum amount of residual polyisocyanate content of 5.54%. Upon confirmation of completeness of reaction cool the reaction mixture to 175F. To the reaction mixture at 79.5°C (175°F) add 10.6 grams of triethylamine neutralizing agent. To a separate vessel add 520.63 grams of water at 35-40.5°C (95-105°F) and 0.09 grams of DeeFo PI40 defoamer (supplied by Munzing). Start agitation in the water containing vessel. Slowly add 359.36 grams of the reaction mixture to the water allowing incorporation and dispersion of the reaction mixture into the water over a 3-7 minute period. Mix the dispersion for 10-20 minutes after complete addition of the reaction mixture. To the dispersion add 10.23 grams of 64% hydrazine hydrate diluted with water to 35% solids content. Mix for 10-15 minutes after addition of the hydrazine hydrate and test a small aliquot for residual isocyanate content via FTIR analysis (2250^{-cm} peak). Mix to complete elimination of the residual isocyanate peak as determined by FTIR. The resulting dispersion has a polyurethane solids content of 35% by weight and a polyurethane solids composition of 38.53% polyisocyanate, 55.43% polyester polyol, 3.94% dimethylol propionic acid, 2.08% hydrazine. As produced the dispersion contains 13.35% dipropylene glycol monomethyl ether cosolvent based upon polyurethane solids content.

Upon complete elimination of the residual isocyanate peak as determined by FTIR analysis allow the liquid dispersion to equilibrate to 21.1°C (70°F) temperature. Test the liquid dispersion for film formation at 21.1°C (70°F) and 50% Relative Humidity by applying a 10 wet mil film of the dispersion to clean glass at 21.1°C (70°F) temperature and allowing the film to air dry. Determination of coalescence is made by visual observation of the elimination of film 'cracks' and fractures upon air dry of a 254 microns wet (10 wet mils)film on glass at 50% relative humidity and 21.1°C (70°F) temperature. Post add stepwise additions of dipropylene glycol dimethyl ether and record the total amount of additional dipropylene glycol dimethyl ether required to create film formation as described at 21.1°C (70°F) and 50% relative humidity.

Upon establishment of dipropylene glycol dimethyl ether content required for coalescence use wet solutions with added cosolvent at determined levels to test resulting films for the following:
i. Modulus, tensile and elongation of films coated at 254 microns wet (10 wet mils) on glass and oven dried for 3 minutes at 150°C.
ii. Abrasion resistance via ASTM D4060 recording milligrams loss in weight at 1000 abrasion cycles using Taber Abrader with CS-17 wheel, 1000 gram weight on coated birch wood panels.
iii. Koenig hardness on films coated to glass using #40 Meyer Rod and cured as described in results.

A.Equivalent polymer charge and preparation and testing as described in Example 1 replacing the 1258 molecular weight hydroxyl terminal polyester diol derived from the reaction products of tertiary alkyl glycidyl esters with polyester diol based upon hexane-neopentyl adipate blended to 1258 molecular weight. Suitable polyols are well known in the art and examples of such are Piothane 67-1000 and Piothane 67-3000 supplied by Pioneer resins, Rucoflex 1015-120, Rucoflex 1015-35 supplied by Bayer.

B.Equivalent polymer charge and preparation and testing as described in Example 1 replacing the 1258 molecular weight hydroxyl terminal polyester diol derived from the reaction products of tertiary alkyl glycidyl esters with polycaprolactone diol based upon butanediol initiated polycaprolactone polyol blended to 1258 molecular weight. Suitable polyols are well known in the art and an example of such are CAPA 2200 and CAPA 2100 supplied by Perstorp.

C.Equivalent polymer charge and preparation and testing as described in Example 1 replacing the 1258 molecular weight hydroxyl terminal polyester diol derived from the reaction products of tertiary alkyl glycidyl esters with polycarbonate diol based CHDM initiated polycarbonate polyol blended to 1258 molecular weight. Suitable polyols are well known in the art and examples of such are PC1667 supplied by STAHL USA.

Processing and test results for Example 1 and versions A, B and C are as follows:

| Test System | Example 1 | Version A | Version B | Version C |
|---|---|---|---|---|
| Polyol Type | Hydroxyl Terminal Polyester Diol derived from the reaction products of tertiary alkyl glycidyl esters | Hexane-Neopentyl Adipate | Butanediol Initiated Polycaprola ctone | CHDM Initiated Polycarbon ate |
| Polyol Molecular Weight | 1258 | 1258 | 1258 | 1258 |
| Prepolymer Viscosity @ 77°C (170°F) and 88% Prepolymer Solids Content | 4,500 cps* | 4,500 cps* | 4,500 cps* | 4,500 cps* |
| DMPA Cook Time @ 88-96°C (190-205°F) | 24 minutes | 40 min | 60 min | 54 min |
| % DMM Cosolvent required for coalescence at 21.1°C (70°F) and 50% RH based upon polyurethane solids content | 20.69% | 38.76% | 39.23% | 51.99% |
| Koenig Hardness #40 rod on glass air dried 30 minutes 21.1°C (70°F) and oven dried 4 hours @ 60C. Koenig Hardness recorded at 21.1°C (70°F) /50% RH | 108 | 49 | 47 | 105 |
| Taber Abrasion mg loss per 1000 cycles CS-17 wheel, 1000 gram weight, 21.1°C (70°F)and 50% RH | 11.05 mg | 69.00 mg | 37.65 mg | 12.95 mg |
| Film Properties of 254 microns wet (10 wet mil) film coated to glass, air dried 10 minutes 21.1°C (70°F), oven dried 3 minutes 150°C. Removed from glass and air dried 7 days 21.1°C (70°F) and 50%RH. | | | | |
| 100% Modulus | 2667psi | 1588psi | 1603psi | 3510psi |
| Tensile at Break | 3231psi | 2152psi | 2552psi | 4107psi |
| Elongation | 149% | 222% | 202% | 141% |

| Polyurethane Backbone Composition | | | | |
|---|---|---|---|---|
| % Dicyclohexylmethane Diisocyanate | 38.53 | 38.53 | 38.53 | 38.53 |
| %Polyester Diol | 55.43 | 55.43 | 55.43 | 55.43 |
| %Dimethylol Propionic Acid | 3.94 | 3.94 | 3.94 | 3.94 |
| %Hydrazine | 2.08 | 2.08 | 2.08 | 2.08 |

| | | | | |
|---|---|---|---|---|
| *: BKFLD RVT #4@20@ 77°C (170°F) | | | | |

Test results indicate that the use of hydroxyl terminal polyester diol derived from the reaction products of tertiary alkyl glycidyl esters in the preparation of a water based polyurethane can yield the unique resulting property attributes of reduced cosolvent coalescent demand required for film formation at room temperature, increased film penetration hardness, improved abrasion resistance as compared to stochiometrically equivalent polyurethane systems utilizing polyester diols that are currently commercially available in the industry and well known to the art.

## Claims

1. A polyurethane aqueous dispersion composition comprising a hydroxyl terminal oligomer derived from an alkyl glycidyl ester and carboxylic di-acids and anhydride hemi-ester, wherein the di-acid, the anhydride or the hemi-ester are not derived from unsaturated fatty acids, and a poly-isocyanate and a water dispersing component and a chain extender component, wherein the oligomer is **characterized in that** the molecular weight is between 600 and 5000, preferably between 800 and 3500, and most preferably between 1200 and 2800, and free of meth(acrylic) derivatives.

2. The composition of claim 1 wherein the alkyl glycidyl ester is a linear or branched alkyl glycidyl ester with the alkyl group containing from 4 to 12 carbon atoms.

3. The composition of claims 1-2 wherein the branched alkyl chain is a tertiary alkyl chain with 4 to 12 carbon atoms, preferably from 8 to 10 carbon atoms and most preferably with 9 carbon atoms.

4. The composition of claims 1 to 3 wherein the polyisocyanate may be dicyclohexylmethane diisocyanate, isophorone diisocyanate, hexane diisocyanate, tetramethylxylene diisocyanate, toluene diisocyanate, diphenylmethane diisocyanate, or, combinations thereof and wherein the diisocyanate is more preferably dicyclohexylmethane diisocyanate.

5. The composition of claims 1 to 4 wherein the polyisocyanate content is between 25 to 50 weight % on total polyurethane solids content.

6. The composition of claims 1 to 5 wherein the polyisocyanate content is preferably between 27 to 48 weight %, and more preferably between 38 to 44 weight % based upon total polyurethane solids content.

7. The composition of claims 1 to 6 wherein the water dispersing component may be anionic or cationic or nonionic or combinations thereof.

8. The composition of claims 1 to 7 wherein the polyol component is comprised of a hydroxyl terminal oligomer derived from an alkyl glycidyl ester and carboxylic di-acids and anhydride, wherein the alkyl chain is a tertiary alkyl chain with 4 to 12 carbon atoms, preferably from 8 to 10 carbon atoms and most preferably with 9 carbon atoms.

9. The composition of claims 1 to 8 wherein the polyol component of claim 9 may be used as a mixture with general classes of polyols and glycols such as polyesters, polycaprolactones, polycarbonates, polyethers, short chain glycols.

10. The composition of claims 1 to 9 wherein the polyol component is between 25 to 60 weight% based upon total polyurethane solids content.

11. The composition of claims 1 to 10 wherein the chain extender component used may be selected from the classes of aliphatic polyfunctional amines, aromatic polyfunctional amines, blocked amines, amino alcohols, polyether amines, water and preferably an aliphatic diamine and more preferably hydrazine.

12. The composition of claims 1 to 11 wherein the level of co-solvent is lower than 25.5 weight% on total polyurethane solids content.

13. The composition of claims 1 to 11 wherein the composition is preferably free of n-methylpyrolidone.

14. The composition of claims 1 to 13 wherein the composition comprising a hydroxyl terminal oligomer derived from an alkyl glycidyl ester and carboxylic di-acids and anhydride hemi-ester, wherein the di-acid, the anhydride or the hemi-ester are not derived from unsaturated fatty acids, and a poly-isocyanate and a water dispersing component and a chain extender component, wherein the oligomer is **characterized in that** the molecular weight is between 600 and 5000, preferably between 800 and 3500, and most preferably between 1200 and 2800, and free of meth(acrylic) derivatives.

15. The composition of claims 1 to 14 comprising 25-50 weight% diisocyanate and more preferably 38-44 weight % dicyclohexylmethane diisocyanate, 25-60 weight % polyol component, and more preferably 49 - 56 weight % polyol component, as branched alkyl chain which is a tertiary alkyl chain with 4 to 12 carbon atoms, preferably from 8 to 10 carbon atoms and most preferably with 9 carbon atoms.

16. The composition of claim 1 to 15 wherein the weight % level of cosolvent required for film formation at 25°C of the resulting polyurethane polymer is 35 to 60% lower than stochiometrically equivalent polyurethane systems utilizing hexane-neopentyl adipate polyester or BDO initiated polycaprolactone or CHDM initiated polycarbonate as the polyol component.

17. The composition of claim 1 to 16 wherein the Koenig Hardness of the resulting polyurethane polymer is 83 to 124% higher than stochiometrically equivalent polyurethane systems utilizing hexane-neopentyl adipate polyester or BDO initiated polycaprolactone as the polyol component.

18. The composition of claim 1 to 17 wherein the Koenig Hardness of the resulting polyurethane polymer is 2 to 3% higher, and, the weight % level of cosolvent required for film formation at 25°C of the resulting polyurethane polymer is 55 to 60% lower than stochiometrically equivalent polyurethane systems utilizing CHDM initiated polycarbonate as the polyol component.

19. The composition of claim 16 wherein the Taber Abrasion resistance measured as mg loss/1000 cycles yields between 49 to 84% reduction in mg loss comparative to stochiometrically equivalent polyurethane systems utilizing hexane-neopentyl adipate polyester or BDO initiated polycaprolactone as the polyol component.

20. The composition of claim 16 wherein the Taber Abrasion resistance measured as mg loss/1000 cycles yields between 10 to 15% reduction in mg loss comparative to stochiometrically equivalent polyurethane systems utilizing CHDM initiated polycarbonate as the polyol component.

## Patentansprüche

1. Wässrige Polyurethan-Dispersionszusammensetzung, umfassend ein Hydroxyl-terminales Oligomer, abgeleitet von einem Alkylglycidylester und Dicarbonsäuren und Anhydrid-Hemiester, wobei die Disäure, das Anhydrid oder der Hemiester nicht von ungesättigten Fettsäuren abgeleitet sind, und ein Polyisocyanat und eine wasserdispergierende Komponente und eine Kettenverlängerungskomponente, wobei das Oligomer **dadurch gekennzeichnet ist, dass** das Molekulargewicht zwischen 600 und 5000, vorzugsweise zwischen 800 und 3500 und am meisten bevorzugt zwischen 1200 und 2800 liegt und frei von Methacrylderivaten ist.

2. Zusammensetzung nach Anspruch 1, wobei der Alkylglycidylester ein linearer oder verzweigter Alkylglycidylester ist, wobei die Alkylgruppe 4 bis 12 Kohlenstoffatome enthält.

3. Zusammensetzung nach Anspruch 1-2, wobei die verzweigte Alkylkette eine tertiäre Alkylkette mit 4 bis 12 Kohlenstoffatomen, vorzugsweise 8 bis 10 Kohlenstoffatomen und am meisten bevorzugt mit 9 Kohlenstoffatomen ist.

4. Zusammensetzung nach den Ansprüchen 1 bis 3, wobei das Polyisocyanat Dicyclohexylmethandiisocyanat, Isophorondiisocyanat, Hexandiisocyanat, Tetramethylxylendiisocyanat, Toluoldiisocyanat, Diphenylmethandiisocyanat oder Kombinationen davon sein kann und wobei das Diisocyanat bevorzugt Dicyclohexylmethandiisocyanat ist.

5. Zusammensetzung nach den Ansprüchen 1 bis 4, wobei der Polyisocyanatgehalt zwischen 25 und 50 Gew.-% des Gesamtgehalts an Polyurethanfeststoffen beträgt.

6. Zusammensetzung nach den Ansprüchen 1 bis 5, wobei der Polyisocyanatgehalt vorzugsweise zwischen 27 und 48 Gew.-%, am meisten bevorzugt zwischen 38 und 44 Gew.-%, liegt, bezogen auf den Gesamtgehalt an Polyurethanfeststoffen.

7. Zusammensetzung nach den Ansprüchen 1 bis 6, wobei die wasserdispergierende Komponente anionisch oder kationisch oder nichtionisch oder Kombinationen davon sein kann.

8. Zusammensetzung nach den Ansprüchen 1 bis 7, wobei die Polyolkomponente ein Hydroxyl-terminales Oligomer umfasst, das abgeleitet ist von einem Alkylglycidylester und Dicarbonsäuren und Anhydriden, wobei die Alkylkette eine tertiäre Alkylkette mit 4 bis 12 Kohlenstoffatomen ist, vorzugsweise 8 bis 10 Kohlenstoffatomen und am meisten bevorzugt mit 9 Kohlenstoffatomen.

9. Zusammensetzung nach den Ansprüchen 1 bis 8, wobei die Polyolkomponente nach Anspruch 9 als Mischung mit allgemeinen Klassen von Polyolen und Glykolen wie Polyestern, Polycaprolactonen, Polycarbonaten, Polyethern, kurzkettigen Glykolen verwendet werden kann.

10. Zusammensetzung nach den Ansprüchen 1 bis 9, wobei die Polyolkomponente zwischen 25 und 60 Gew.-% beträgt, bezogen auf den Gesamtgehalt an Polyurethanfeststoffen.

11. Zusammensetzung nach den Ansprüchen 1 bis 10, wobei die verwendete Kettenverlängerungskomponente ausgewählt sein kann aus den Klassen der aliphatischen polyfunktionellen Amine, aromatischen polyfunktionellen Amine, blockierten Amine, Aminoalkohole, Polyetheramine, Wasser und vorzugsweise einem aliphatischen Diamin und am meisten bevorzugt Hydrazin.

12. Zusammensetzung nach den Ansprüchen 1 bis 11, wobei der Gehalt an Co-Lösungsmittel niedriger als 25,5 Gew .-% des Gesamtgehalts an Polyurethanfeststoffen ist.

13. Zusammensetzung nach den Ansprüchen 1 bis 11, wobei die Zusammensetzung vorzugsweise frei von n-Methylpyrolidon ist.

14. Zusammensetzung nach den Ansprüchen 1 bis 13, wobei die Zusammensetzung ein Hydroxyl-terminales Oligomer umfasst, das von einem Alkylglycidylester und Dicarbonsäuren und Anhydrid-Hemiester abgeleitet ist, wobei die Di-Säure, das Anhydrid oder der Hemi-Ester nicht von ungesättigten Fettsäuren abgeleitet sind, und ein Polyisocyanat und eine wasserdispergierende Komponente und eine Kettenverlängerungskomponente, wobei das Oligomer **dadurch gekennzeichnet ist, dass** das Molekulargewicht zwischen 600 und 5000, vorzugsweise zwischen 800 und 3500 und am meisten bevorzugt zwischen 1200 und 2800 liegt und frei von Methacrylderivaten ist.

15. Zusammensetzung nach den Ansprüchen 1 bis 14, umfassend 25-50 Gew .-% Diisocyanat, am meisten bevorzugt 38-44 Gew .-% Dicyclohexylmethandiisocyanat, 25-60 Gew .-% Polyolkomponente, am meisten bevorzugt 49-56 Gew .-% Polyolkomponente, als verzweigte Alkylkette eine tertiäre Alkylkette mit 4 bis 12 Kohlenstoffatomen, vorzugsweise 8 bis 10 Kohlenstoffatomen und am meisten bevorzugt mit 9 Kohlenstoffatomen.

16. Zusammensetzung nach Anspruch 1 bis 15, wobei der Gewichtsanteil an Co-Lösungsmittels, der für die Filmbildung bei 25 ° C des resultierenden Polyurethanpolymers erforderlich ist, 35 bis 60 % niedriger ist als bei stöchiometrisch äquivalenten Polyurethansystemen unter Verwendung von Hexan-Neopentyladipat-Polyester oder BDOinitiiertem Polycaprolacton oder CHDM initiiertem Polycarbonat als Polyolkomponente.

17. Zusammensetzung nach Anspruch 1 bis 16, wobei die Koenig-Härte des resultierenden Polyurethanpolymers 83 bis 124 % höher ist als bei stöchiometrisch äquivalenten Polyurethansystemen unter Verwendung von Hexan-Neopentyladipat-Polyester oder BDOinitiiertem Polycaprolacton als Polyolkomponente.

18. Zusammensetzung nach Anspruch 1 bis 17, wobei die Koenig-Härte des resultierenden Polyurethanpolymers 2 bis 3 % höher und der Gew.-%-Anteil an Co-Lösungsmittel, der für die Filmbildung bei 25 ° C des resultierenden Polyurethanpolymers erforderlich ist, 55 bis 60 % niedriger ist als bei stöchiometrisch äquivalenten Polyurethansystemen unter Verwendung von CHDM-initiiertes Polycarbonat als Polyolkomponente.

19. Zusammensetzung nach Anspruch 16, wobei die Taber-Abriebfestigkeit, gemessen als mg-Verlust / 1000 Zyklen, eine Verringerung des mg-Verlusts zwischen 49 und 84 % im Vergleich zu stöchiometrisch äquivalenten Polyurethansystemen aufweist, die Hexan-Neopentyladipat-Polyester oder BDO-initiiertes Polycaprolacton als Polyolkomponente verwenden.

20. Zusammensetzung nach Anspruch 16, wobei die Taber-Abriebfestigkeit, gemessen als mg-Verlust/1000 Zyklen, eine Verringerung des mg-Verlusts zwischen 10 bis 15 % im Vergleich zu stöchiometrisch äquivalenten Polyurethansystemen aufweist, die CHDM-initiiertes Polycarbonat als Polyolkomponente verwenden.

## Revendications

1. Une composition de dispersion aqueuse de polyuréthane comprenant un oligomère hydroxyle terminal dérivé d'un alkylglycidylester et de diacides carboxyliques et d'un hémi-ester d'anhydride, dans laquelle le di-acide, l'anhydride ou l'hémi-ester ne sont pas dérivés d'acides gras insaturés, et un polyisocyanate et un composant de dispersion dans l'eau et un composant d'allongement de chaîne, dans lequel l'oligomère est **caractérisé en ce que** le poids moléculaire est compris entre 600 et 5000, de préférence entre 800 et 3500, et de manière préférée entre toutes entre 1200 et 2800, et exempt de dérivés méth(acrylique).

2. La composition selon la revendication 1, dans laquelle l'ester d'alkylglycidyle est un ester d'alkyle glycidylique linéaire ou ramifié avec le groupe alkyle contenant de 4 à 12 atomes de carbone.

3. La composition selon les revendications 1 et 2, dans laquelle la chaîne alkyle ramifiée est une chaîne alkyle tertiaire avec 4 à 12 atomes de carbone, de préférence 8 à 10 atomes de carbone et de manière préférée entre toutes avec 9 atomes de carbone.

4. La composition selon les revendications 1 à 3, dans laquelle le polyisocyanate peut être le diisocyanate de dicyclohexylméthane, le diisocyanate d'isophorone, l'hexane diisocyanate, le diisocyanate de tétraméthylxylène, le diisocyanate de toluène, le diisocyanate de diphénylméthane, ou des combinaisons de ceux-ci et dans laquelle le diisocyanate est de préférence le diisocyanate de dicyclohexylméthane.

5. La composition selon les revendications 1 à 4, dans laquelle la teneur en polyisocyanate est comprise entre 25 et 50% en poids de la teneur totale en solide du polyuréthane.

6. La composition selon les revendications 1 à 5, dans laquelle la teneur en polyisocyanate est de préférence comprise entre 27 et 48% en poids, et plus préférablement entre 38 et 44% en poids sur la base de la teneur totale en solide de polyuréthane.

7. La composition selon les revendications 1 à 6, dans laquelle le composant de dispersion dans l'eau peut être anionique ou cationique ou non ionique ou des combinaisons de ceux-ci.

8. La composition selon les revendications 1 à 7, dans laquelle le composant polyol est constitué d'un oligomère hydroxyle terminal dérivé d'un ester alkylglycidylique et de diacides carboxyliques et d'un anhydride, dans laquelle la chaîne alkyle est une chaîne alkyle tertiaire avec 4 à 12 atomes de carbone, de préférence de 8 à 10 atomes de carbone et de manière préférée entre toutes avec 9 atomes de carbone.

9. La composition selon les revendications 1 à 8, dans laquelle le composant polyol selon la revendication 9 peut être utilisé en mélange avec des classes générales de polyols et de glycols tels que les polyesters, les polycaprolactones, les polycarbonates, les polyéthers, les glycols à chaîne courte.

10. La composition selon les revendications 1 à 9, dans laquelle le composant polyol est compris entre 25 et 60% en poids sur la base de la teneur totale en solide du polyuréthanne.

11. La composition selon les revendications 1 à 10, dans laquelle le composant d'allongement de chaîne utilisé peut être choisi parmi les classes des amines polyfonctionnelles aliphatiques, des amines polyfonctionnelles aromatiques, des amines bloquées, des amino-alcools, des polyétheramines, d'eau et de préférence une diamine aliphatique et plus préférablement l'hydrazine.

12. La composition selon les revendications 1 à 11, dans laquelle le taux de cosolvant est inférieur à 25,5% en poids sur la teneur totale en solide du polyuréthanne.

13. La composition selon les revendications 1 à 11, dans laquelle la composition est de préférence exempte de n-méthylpyrolidone.

14. La composition selon les revendications 1 à 13, dans laquelle la composition comprenant un oligomère hydroxyle terminal dérivé d'un ester d'alkyle glycidyle et de diacides carboxyliques et d'hémi-ester d'anhydride, dans laquelle le diacide, l'anhydride ou l'hémi-ester ne sont pas dérivés d'acides gras insaturés et un polyisocyanate et un composant de dispersion dans l'eau et un composant d'allongement de chaîne, dans lequel l'oligomère est **caractérisé en ce que** le poids moléculaire est compris entre 600 et 5000, de préférence entre 800 et 3500, et de manière préférée entre toutes entre 1200 et 2800, et sans dérivés méth(acryliques).

15. La composition selon les revendications 1 à 14, comprenant 25 à 50% en poids de diisocyanate et plus préférablement 38 à 44% en poids de diisocyanate de dicyclohexylméthane, 25 à 60% en poids de composant polyol, et plus préférablement 49 à 56% en poids de composant polyol, sous forme de chaîne alkyle ramifiée qui est une chaîne alkyle tertiaire avec 4 à 12 atomes de carbone, de préférence 8 à 10 atomes de carbone et de manière préférée entre toutes avec 9 atomes de carbone.

16. La composition selon les revendications 1 à 15, dans laquelle le pourcentage en poids de cosolvant requis pour la formation d'un film à 25 ° C du polymère de polyuréthane résultant est de 35 à 60% inférieur à celui des systèmes de polyuréthane équivalents stochiométriquement utilisant un polyester d'adipate d'hexane-néopentyle ou une polycaprolactone initiée par BDO ou CHDM polycarbonate initié comme composant polyol.

17. La composition selon les revendications 1 à 16, dans laquelle la dureté Koenig du polymère de polyuréthane résultant est de 83 à 124% plus élevée que les systèmes de polyuréthane équivalents du point de vue stochiométrique utilisant un polyester d'adipate d'hexane-néopentyle ou une polycaprolactone initiée par BDO en tant que composant polyol.

18. La composition selon les revendications 1 à 17, dans laquelle la dureté Koenig du polymère de polyuréthane résultant est de 2 à 3% plus élevée, et le taux en% en poids de cosolvant requis pour la formation d'un film à 25 ° C du polymère de polyuréthane résultant est de 55 à 60% inférieur que les systèmes de polyuréthane stochiométriquement équivalents utilisant du polycarbonate initié par CHDM comme composant polyol.

19. La composition selon la revendication 16, dans laquelle la résistance à l'abrasion Taber mesurée en mg de perte / 1000 cycles donne entre 49 et 84% de réduction de la perte en mg par rapport aux systèmes de polyuréthane stochiométriquement équivalents utilisant un polyester hexane-adipate de néopentyle ou une polycaprolactone initiée par BDO comme composant polyol.

20. La composition selon la revendication 16, dans laquelle la résistance à l'abrasion Taber mesurée en mg de perte / 1000 cycles donne une réduction de 10 à 15% de la perte en mg par rapport aux systèmes de polyuréthane stochiométriquement équivalents utilisant un polycarbonate initié par CHDM comme composant polyol.
